# DEMANDE DE BREVET EUROPEEN

(11) **EP 4 670 591 A1**
(43) Date de publication de la demande: **31.12.2025**
(21) Numéro de dépôt: 25185989.8
(22) Date de dépôt: 27.06.2025
(51) Int. Cl.: A47J 43/044, A23G 9/12, A23G 9/22, A47J 43/07

(54) **APPAREIL DE PREPARATION CULINAIRE POUR LA REALISATION DE PREPARATIONS CULINAIRES FROIDES**

(30) Priorité: 27.06.2024 FR 2406993
(71) Demandeur: SEB S.A., 69130 Ecully (FR)
(72) Inventeur: BLOND, Laurent, 69134 Ecully Cedex (FR); GONÇALVES DE OLIVEIRA CHUEIRE, Pedro Henrique, 69134 Ecully Cedex (FR)
(74) Mandataire: SEB Développement

(57) **Abrégé**

L'invention concerne un appareil (100) de préparation culinaire, lequel comprend un corps (103) présentant une base (104), une tête (105) s'étendant au-dessus de la base (104), et un bol (101) configuré pour être engagé sur la base (104). La tête (105) reçoit un outil (200) de traitement culinaire et comprend un système d'entraînement (106) de l'outil (200) de traitement culinaire selon un mouvement planétaire. La tête (105) peut être déplacée dans une position engagée où l'outil (200) de traitement culinaire se loge dans le bol (101) ou dans une position dégagée où l'outil (200) de traitement culinaire est éloigné du bol (101).

Selon l'invention, le bol (101) reçoit de manière amovible une base réfrigérante (4) présentant une surface supérieure (6) qui est réfrigérante et plane. L'outil (200) de traitement culinaire comprend une lame (202) qui présente au moins une partie (204) venant au contact de la surface supérieure (6) pour la racler lors de sa mise en mouvement planétaire.

## Description

### Domaine technique

La présente invention concerne le domaine des appareils de préparation culinaire, plus précisément un appareil de préparation culinaire permettant de réaliser des préparations culinaires froides telles que des glaces, des sorbets ou des yaourts glacés.

### Etat de la technique

Les appareils de préparation culinaire sont très répandus sur le marché afin de réaliser différents types de préparation culinaire. Parmi les appareils de préparation culinaire, certains sont adaptés pour la réalisation de préparations culinaires froides telles que des glaces, des sorbets ou des yaourts glacés.

Un tel appareil de préparation culinaire pour la réalisation de préparations culinaires froides comprend généralement corps muni d'une base, une tête s'étendant au-dessus de la base, un contenant disposé au-dessus de la base permettant de recevoir les ingrédients de la préparation culinaire froide, le contenant présentant une paroi réfrigérée sur laquelle viennent en contact les ingrédients durant la réalisation de la préparation culinaire froide, et un outil de traitement culinaire destiné à racler ladite paroi réfrigérée et à mélanger les ingrédients refroidis durant ladite réalisation de la préparation culinaire froide. La paroi réfrigérée peut être composée du fond et éventuellement du contour dudit contenant. L'outil de traitement culinaire est mis en mouvement dans le contenant au moyen d'un système d'entraînement agencé sur la tête, laquelle peut être déplacée vis-à-vis du corps de l'appareil soit dans une position engagée où l'outil de traitement culinaire se loge dans le contenant et vient racler la paroi réfrigérée dudit contenant, soit dans une position dégagée où l'outil de traitement culinaire est éloigné du contenant pour permettre le démontage et le nettoyage de l'outil de traitement culinaire, ainsi que le retrait du contenant afin d'en extraire la préparation culinaire froide obtenue et le nettoyage dudit contenant.

Parmi les appareils de préparation culinaire existants sur le marché, il est notamment connu celui décrit dans la demande internationale de brevet publiée sous le numéro WO2012113018A1. Cet appareil de préparation culinaire comprend un bol réfrigérant à double paroi, plus précisément un bol comprenant une coque externe et une coque interne entre lesquelles sont agencés des éléments réfrigérants disposés en contact avec le contour de la coque interne. En outre, le système d'entraînement agencé sur la tête dudit appareil est configuré pour entraîner l'outil de traitement culinaire selon un mouvement planétaire lorsque celui-ci est inséré dans le bol réfrigérant et racle la paroi réfrigérée dudit bol réfrigérant, c'est-à-dire un fond et un contour de la coque interne définissant un contenant de réception des ingrédients de la préparation culinaire.

Selon cette conception de l'appareil de préparation culinaire décrite dans la demande internationale de brevet WO2012113018A1, lors de l'usage, le bol réfrigérant est placé dans un compartiment de congélation d'un appareil électro-ménager frigorifique, plus généralement appeler un congélateur ou un réfrigérateur équipé d'un tel compartiment de congélation, de sorte à refroidir les éléments réfrigérants. Une fois prêt à l'emploi, le bol réfrigérant est placé sur la base de l'appareil et les ingrédients sont placés dans le réceptacle afin d'entrer en contact avec la coque interne réfrigérée, leur traitement au moyen de l'outil de traitement culinaire permettant l'obtention de la préparation culinaire froide.

Cette conception de l'appareil de préparation culinaire selon le document WO2012113018A1 présente pour inconvénient de disposer d'une place suffisamment importante dans le compartiment de congélation afin d'y loger le bol réfrigérant. En outre, la durée de traitement culinaire pour l'obtention de la préparation culinaire froide peut s'avérer élevée du fait que l'outil de traitement culinaire racle avec une fréquence de balayage élevée toute le fond et surtout le contour de la coque interne du bol réfrigérant sur lequel sont projetés les ingrédients en cours de traitement culinaire, ce qui limite le temps d'échange thermique entre la coque interne réfrigérée et les ingrédients de la préparation culinaire placés dans ladite coque interne réfrigérée, durant le traitement culinaire.

### Résumé de l'invention

La présente invention permet vise à pallier les inconvénients précités. Dans ce but, l'invention concerne un appareil de préparation culinaire, lequel comprend un corps présentant une base, une tête s'étendant au-dessus de la base et un bol configuré pour être engagé sur la base. La tête est configurée pour recevoir un outil de traitement culinaire et comprend un système d'entraînement configuré pour entraîner l'outil de traitement culinaire selon un mouvement planétaire. En outre, la tête est configurée pour être déplacée dans une position engagée où l'outil de traitement culinaire se loge dans le bol ou dans une position dégagée où l'outil de traitement culinaire est éloigné du bol. Selon l'invention, le bol reçoit de manière amovible une base réfrigérante présentant une surface supérieure qui est réfrigérante et plane. En outre, selon l'invention, l'outil de traitement culinaire comprend une lame qui présente au moins une partie venant au contact de la surface supérieure pour la racler lors de sa mise en mouvement planétaire.

Ainsi, selon l'invention, seule la base réfrigérante, dont l'encombrement est limité, peut être placée dans un compartiment de congélation, le bol pouvant être retiré de la base réfrigérante. La base réfrigérante peut être positionnée facilement dans le bol pour la réalisation d'un traitement culinaire. Par ailleurs, la mise en contact d'au moins une partie de la lame sur la surface supérieure réfrigérante et plane, en la soumettant à un mouvement planétaire, favorise un temps d'échange thermique entre ladite surface supérieure et les ingrédients en cours de traitement thermique, ce qui permet d'optimiser la durée de traitement pour l'obtention de la préparation culinaire froide.

Selon une réalisation de l'appareil de préparation culinaire objet de l'invention, la surface supérieure est un disque de diamètre D, l'au moins une partie de lame venant au contact du disque et étant décalée d'un premier axe de rotation de la lame sur elle-même. En outre, ladite au moins une partie s'étend sur une longueur L2, le rapport L2/D étant inférieur à 0,3. De préférence, le rapport L2/D est égal à 0,25. Ce choix permet d'optimiser le temps de contact des ingrédients en cours de traitement culinaire avec la surface supérieure, afin de favoriser l'échange thermique et de réduire le temps de traitement.

Selon une réalisation préférentielle, la lame comprend une première partie et une seconde partie, la première partie s'étendant radialement à un premier axe de rotation de la lame sur elle-même et étant prolongée par la seconde partie qui est décalée du premier axe et constitue ladite au moins une partie. En outre, la seconde partie est disposée à une distance D1 en-dessous de la première partie, la première partie étant configurée pour être espacer de la surface supérieure et tasser la préparation culinaire sur ladite surface supérieure et la seconde partie étant configurée pour être en appui sur la surface supérieure et la racler, durant un mouvement planétaire de l'outil de traitement culinaire. Cette conception de la lame permet avantageusement à la première partie d'être légèrement espacée de la surface supérieure de la base réfrigérante, ce qui lui permet avantageusement d'étaler et de tasser les ingrédients de la préparation culinaire froide en cours de réalisation sur la surface supérieure de la base réfrigérante durant le mouvement planétaire de la lame, ce qui augmente l'échange thermique entre ladite surface supérieure et lesdits ingrédients. Tandis que la seconde partie de la lame racle ladite surface supérieure durant le mouvement planétaire pour séparer les ingrédients refroidis en cours de traitement de la surface supérieure et permettre leur mélange et la constitution de la préparation culinaire froide.

Selon cette réalisation préférentielle de la lame, la distance D1 est de préférence comprise entre 0,5 mm et 3 mm, de préférence entre 1 mm et 2 mm. Ce choix permet d'optimiser l'étalement et le tassement des ingrédients en cours de traitement sur la surface supérieure de la base réfrigérante durant le mouvement planétaire de la lame. Bien entendu, d'autres dimensions en-dessous de 0,5 mm ou au-dessus de 3 mm restent envisageables.

Selon cette réalisation préférentielle de la lame, la première partie s'étend de préférence radialement de part et d'autre du premier axe, la seconde partie prolongeant une extrémité de la première partie. Cette conception permet un étalement et un tassement plus efficace des ingrédients en cours de traitement culinaire sur la surface supérieure de la base réfrigérante, en formant des disques sur ladite surface supérieure. Cela permet aussi l'utilisation de l'outil de traitement culinaire avec un bol et une base réfrigérante de diamètres réduits. Cela permet aussi de limiter les projections d'ingrédients en cours de traitement culinaire vers le contour du bol et, ainsi, d'obtenir un meilleur tassement desdits ingrédients sur la surface supérieure de la base réfrigérante. En variante, la première partie pourrait s'étendre radialement d'un côté du premier axe et être prolongée à son extrémité par la seconde partie, cette conception permettant un étalement et un tassement des ingrédients en cours de traitement culinaire sur la surface supérieure de la base réfrigérante, en formant des anneaux sur ladite surface supérieure.

Selon une réalisation préférentielle, l'outil de traitement culinaire comprend une structure de renfort de la lame, la structure de renfort étant configurée pour participer au brassage de la préparation culinaire durant le mouvement planétaire dudit outil de traitement culinaire. Ainsi, la structure de renfort favorise l'incorporation d'air durant le mélange des ingrédients en cours de traitement culinaire, permettant finalement l'obtention d'une préparation culinaire froide mieux aérée. Une variante de la pale sans structure de renfort reste envisageable, en demeurant dans le cadre de l'invention.

Selon une réalisation, l'outil de traitement culinaire comprend un premier organe d'accouplement apte à être assemblé avec un second organe d'accouplement d'un arbre de rotation du système d'entraînement. De préférence, l'outil de traitement culinaire comprend une pièce d'adaptation et une pale comportant la lame, un système d'assemblage étant agencé entre la pièce d'adaptation et la pale et configuré pour assembler de manière amovible la pièce d'adaptation et la pale selon le premier axe, ladite pièce d'adaptation comprenant le premier organe d'accouplement. Cela permet avantageusement de pouvoir utiliser une même pale sur différentes conceptions d'un appareil de préparation culinaire qui disposeront chacune d'une pièce d'adaptation apte à être assemblée avec la pale et comprenant un premier organe d'accouplement compatible avec l'arbre de rotation selon la conception dudit appareil de préparation culinaire.

Selon une réalisation préférentielle, le second organe d'accouplement comprend un ressort configuré pour plaquer l'au moins une partie de la lame contre la surface supérieure, lorsque la tête est dans la position engagée. Ce ressort permet de compenser les jeux de montage pouvant exister entre le premier organe d'accouplement et le second organe d'accouplement et aussi du fait de l'assemblage entre la tête et le corps, afin de garantir que la seconde partie de la lame soit convenablement en contact avec la surface supérieure de la base réfrigérante durant le traitement culinaire.

Selon une réalisation préférentielle, l'appareil de préparation culinaire comprend un réceptacle qui comporte la base réfrigérante et une paroi annulaire montée de manière amovible sur la base réfrigérante. La base réfrigérante comprend un contour annulaire, un système d'assemblage étant agencé entre une face externe du contour annulaire et une face interne de la paroi annulaire. Le système d'assemblage est configuré pour permettre un verrouillage étanche entre la face externe et la face interne lors d'une introduction de la base réfrigérante dans la paroi annulaire, de sorte que la surface supérieure et la face interne définissent un contenant une fois le réceptacle formé, et pour permettre un déverrouillage de la face externe et de la face interne de sorte à pouvoir séparer la base réfrigérante de la paroi annulaire une fois le réceptacle extrait du bol. Bien entendu, des variantes de l'appareil de préparation culinaire selon l'invention sont envisageables sans ce réceptacle amovible, c'est-à-dire sans la paroi annulaire qui, en combinaison avec la base réfrigérante, permet de définir le contenant amovible, dans quel cas la surface supérieure de la base réfrigérante et la face interne du contour du bol définissent le contenant recevant les ingrédients de la préparation culinaire froide à réaliser.

### Brève description des figures

La description suivante met en évidence les caractéristiques et avantages de la présente invention. Cette description s'appuie sur des figures, parmi lesquelles :
- la [Fig. 1] illustre une vue d'ensemble d'un appareil de préparation culinaire objet de l'invention ;
- la [Fig. 2] illustre une vue en coupe de l'appareil illustré en [Fig. 1] ;
- la [Fig. 3] illustre l'appareil de la [Fig.1], sans le bol et le réceptacle objet de l'invention ;
- la [Fig. 4] illustre une conception préférentielle d'un outil de traitement culinaire ;
- la [Fig. 5] illustre une vue d'ensemble d'une réalisation préférentielle du réceptacle objet de l'invention ;
- la [Fig. 6] illustre le réceptacle de la [Fig. 5] positionné dans le bol, l'outil de traitement culinaire de la [Fig. 4] étant en contact d'une surface supérieure d'une base réfrigérante du réceptacle ;
- la [Fig. 7] illustre le réceptacle de la [Fig. 5] vu en coupe ;
- la [Fig. 8] illustre le réceptacle de la [Fig. 5] placé dans le bol, lesdits éléments étant vus en coupe ;
- la [Fig. 9] illustre une réalisation préférentielle d'une base réfrigérante du réceptacle, l'outil de traitement culinaire de la [Fig. 4] étant en contact d'une surface supérieure de la base réfrigérante ;
- la [Fig. 10] illustre une réalisation préférentielle d'une pièce en matériau conducteur thermique de la base réfrigérante ;
- la [Fig. 11] illustre une réalisation préférentielle d'une enceinte en matière plastique de la base réfrigérante, laquelle est destinée à recevoir un matériau à changement de phase ;
- la [Fig. 12] illustre une première vue d'une paroi annulaire du réceptacle de la [Fig. 5] ;
- la [Fig. 13] illustre une seconde vue de la paroi annulaire de la [Fig. 12];
- la [Fig. 14] illustre l'outil de traitement culinaire de la [Fig. 4] selon un autre angle de vue ;
- la [Fig. 15] illustre une vue de dessus de la pièce en matériau conducteur thermique de la [Fig. 10], l'outil de traitement culinaire de la [Fig. 4] étant partiellement représenté avec sa seconde partie en appui sur la surface supérieure de la base réfrigérante.

### Description détaillée

Dans la suite de la description, sans indication contraire, le terme appareil désigne l'appareil de préparation culinaire objet de l'invention. De même, sans indication contraire, le terme outil désigne l'outil de traitement culinaire.

Dans la suite de la description, les termes tels que « horizontal », « vertical », « inférieur », « supérieur », « haut », « bas » ... qui pourraient être employés, le seront en considération de la position normale de l'appareil, du bol ou du réceptacle, reposant en situation d'usage sur un plan de travail horizontal, par exemple une table ou un plan de cuisine.

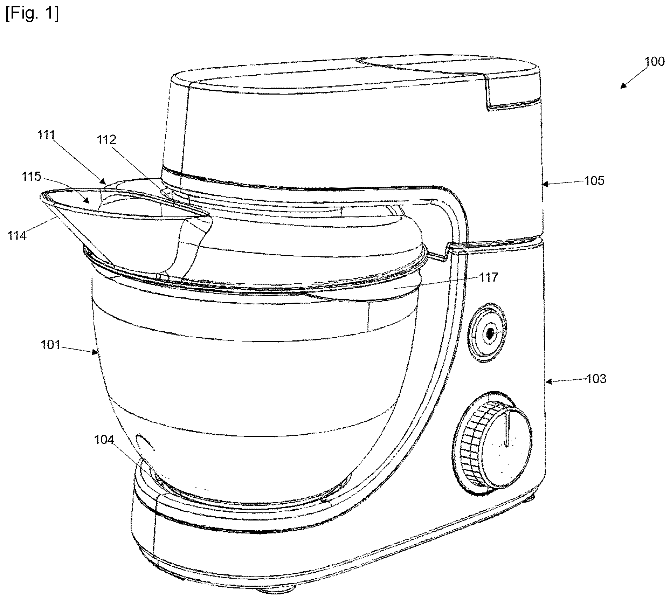

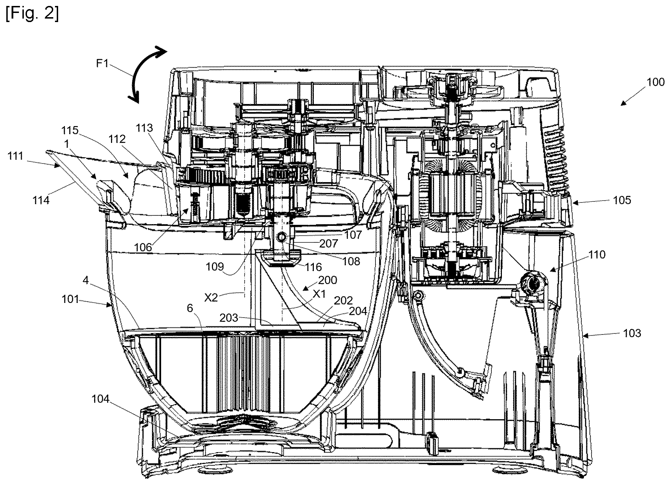

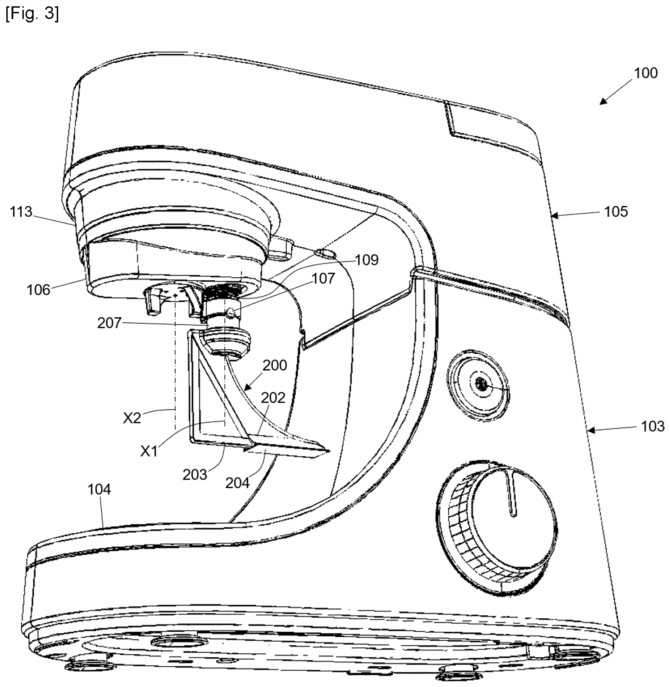

Les [Fig. 1], [Fig. 2] et [Fig. 3] illustrent une réalisation de l'appareil 100 qui comprend un corps 103, une tête 105, un bol 101 qui se positionne sur une base 104 du corps 103 et un outil 200 qui se monte sur la tête 105 et vient se loger dans le bol 101. La tête 105 est montée à pivotement vis-à-vis du corps 103 au moyen d'une charnière 110 qui permet de basculer ladite tête 105 selon le sens de la double flèche F1 illustrée [Fig. 2] pour la placer soit dans une position engagée où l'outil 200 est disposé dans le bol 101 et peut être activé pour réaliser un traitement culinaire sur des ingrédients placés dans le bol 101, soit dans une position dégagée où l'outil 200 est disposé hors du bol 101 pour accéder à celui-ci et éventuellement le retirer de la base 104 de l'appareil 100 ou retirer ce que contient ledit bol 101.

L'activation de l'outil 200 est réalisée au moyen d'un système d'entraînement 106 qui est agencé sur la tête 105 et configuré pour engendrer un mouvement planétaire de l'outil 200 qui tourne sur lui-même autour d'un premier axe X1 de rotation, ledit premier axe X1 tournant également autour d'un second axe X2 de rotation. Le système d'entraînement 106 comprend un arbre de rotation 108 qui s'étend longitudinalement selon le premier axe X1 et tourne autour dudit premier axe X. Cet arbre de rotation 108 est accouplé avec l'outil 200, comme cela sera expliqué ensuite. Le bol 101 est fermé par un couvercle 111 qui comprend une ouverture centrale 112 permettant le passage de l'outil 200 et d'une partie 113 de la tête 105 comportant le système d'entraînement 106, comme le montre la [Fig. 2], lors du positionnement de la tête 105 dans la position engagée. Le couvercle 111 comprend également un bec 114 muni d'une ouverture 115 permettant l'introduction des ingrédients d'une préparation culinaire lorsque le couvercle 111 est placé sur le bol 101.

L'appareil 100 est conçu pour réaliser divers types de préparations culinaires, y compris des préparations culinaires froides telles que des glaces, des sorbets ou des yaourts glacés. Pour cela, l'appareil 100 comprend un réceptacle 1 et un outil 200 spécialement adaptés à la réalisation de telles préparations culinaires froides, le réceptacle 1 étant configuré pour venir se loger de manière amovible dans le bol 101 afin de permettre son retrait et d'utiliser le bol 101 pour la réalisation d'autres types de préparations culinaires ne nécessitant pas la présence dudit réceptacle 1, l'appareil 100 comportant d'autres outils de traitement culinaire que l'outil 200 illustré et décrit ci-après.

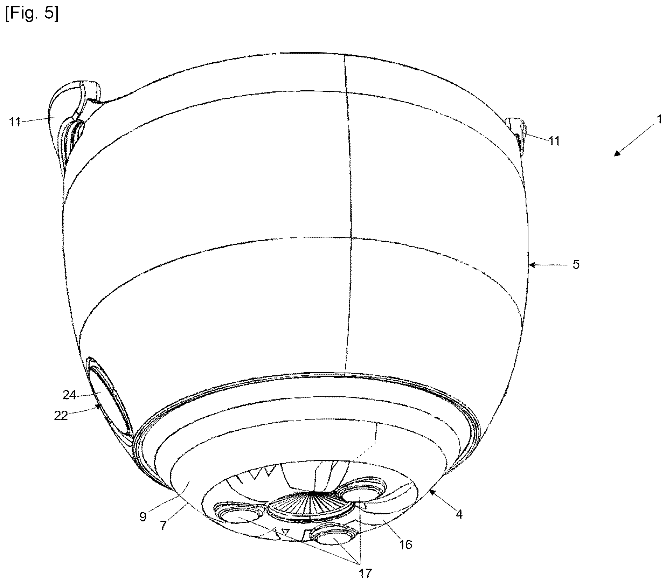

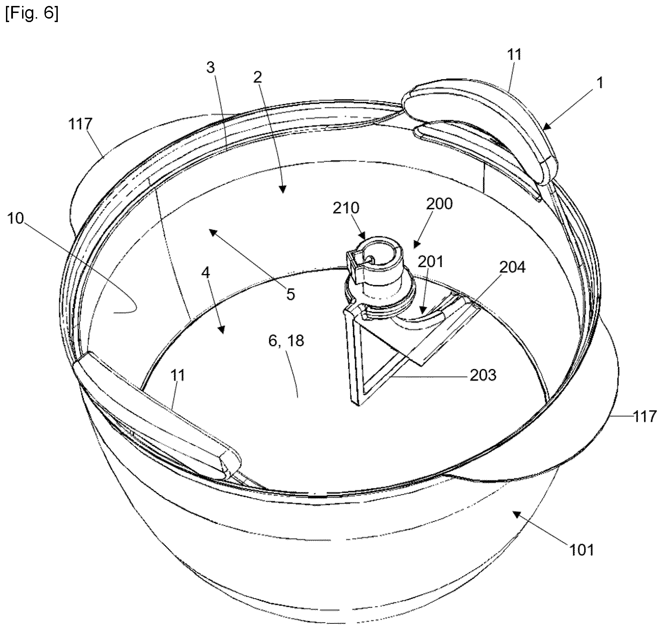

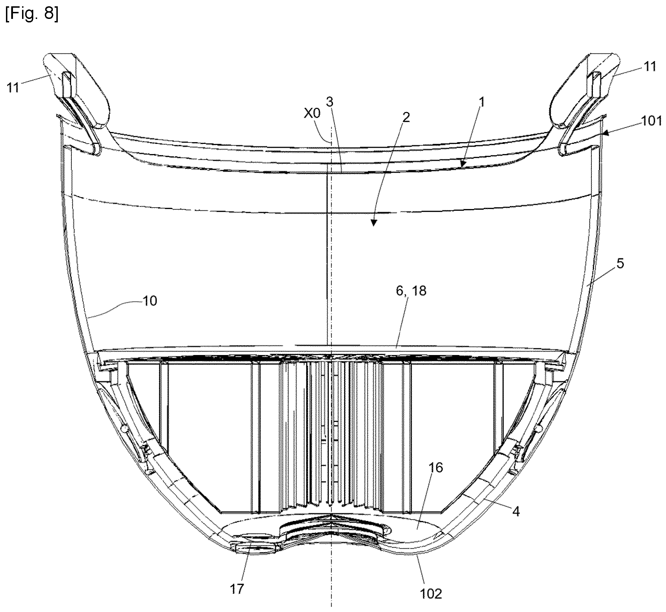

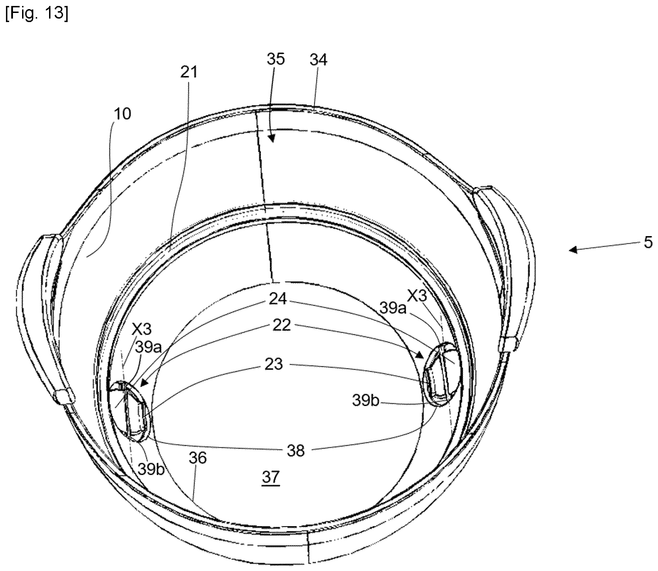

Les [Fig. 5] à [Fig. 13] détaillent une conception préférentielle du réceptacle 1. Le réceptacle 1 comprend une base réfrigérante 4 et une paroi annulaire 5 qui, lorsqu'elles sont assemblées entre elles grâce à un système d'assemblage 8, définissent un contenant 2 qui présente en partie supérieure 3 une ouverture 35 permettant l'introduction d'ingrédients de la préparation culinaire froide à réaliser et aussi l'introduction de l'outil 200 à l'intérieur dudit contenant 2. Lorsque le réceptacle 1 est formé, celui-ci peut être placé dans le bol 101, comme le montrent notamment les [Fig. 6] et [Fig. 8]. Pour faciliter la manipulation du réceptacle 1, celui-ci comporte deux organes de préhension 11 qui sont diamétralement opposés. Le bol 101 comprend également deux organes de préhension 117 diamétralement opposés, pour faciliter sa manipulation.

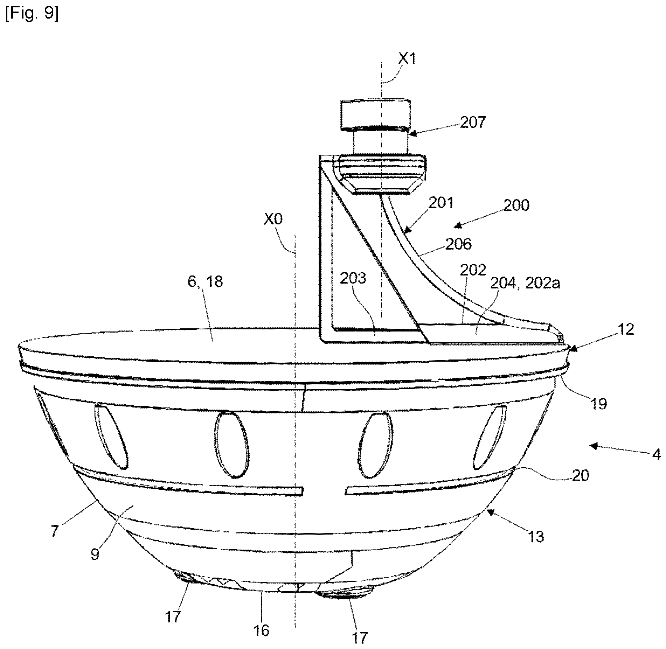

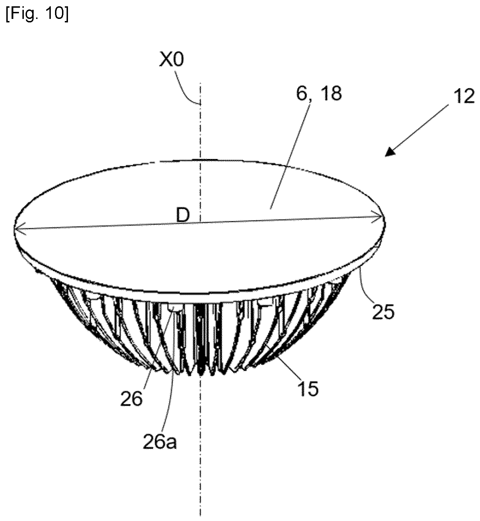

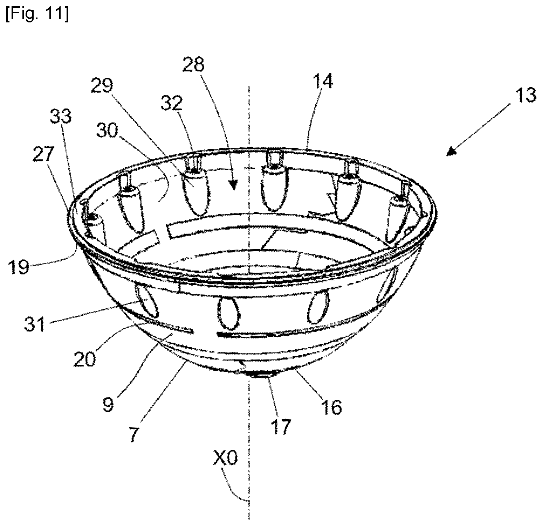

En regard notamment des [Fig. 9] à [Fig. 11], la base réfrigérante 4 comprend une pièce 12 et une enceinte 13. La pièce 12 est constituée dans un matériau présentant une bonne conduction thermique, de préférence de l'aluminium, d'autres matériaux présentant une bonne conduction thermique pouvant être envisagés. La pièce 12 comprend une surface supérieure 6 qui, de préférence, est plane et présente la forme d'un disque 18, d'autres formes pouvant être envisagées, par exemple une forme ovale ou elliptique. Ce disque 18 est défini dans un plan perpendiculaire à un axe médian X0 de la base réfrigérante 4. La pièce 12 comprend sur sa face inférieure 25 des ailettes 15 espacées les unes des autres et réparties uniformément en-dessous ladite face inférieure 25 en s'étendant radialement et vers le bas, comme le montre la [Fig. 10]. La pièce 12 comprend des premiers plots 26 répartis uniformément à la périphérie du disque 18, en-dessous de la face inférieure 25, ces premiers plots 26 comportant sur leur côté inférieur 26a un trou taraudé (non illustré).

L'enceinte 13 définit une cuvette qui permet la réception d'un fluide à changement de phase qui de préférence peut former un fluide liquide, un fluide légèrement pâteux étant envisageable. De préférence, ce fluide est un liquide eutectique. L'enceinte 13 comprend un contour annulaire 7 qui est délimité en partie inférieure par une embase 16 et en partie supérieure par un rebord 27 qui définit une ouverture supérieure 28. Ce rebord 27 définit également avec la face externe 9 du contour annulaire 7 un épaulement externe 19. L'ouverture supérieure 28 permet d'introduire dans l'enceinte 13 les ailettes 15 de la pièce 12, lesquelles viennent ainsi baigner dans le fluide à changement de phase (non illustré) que contient ladite enceinte 13. Le bord périphérique de la face inférieure 25 de la pièce 12 vient alors en appui sur le rebord 27. Le contour annulaire 7 comprend sur sa face externe 9 une gorge 20.

Des seconds plots 29 s'étendent vers le haut depuis une face interne 30 du contour annulaire 7, ces seconds plots 29 étant au même nombre que les premiers plots 26 sur la pièce 12 et disposés avec la même répartition que lesdits premiers plots 26. Les seconds plots 29 sont creux et débouchent sur des orifices 31 sur la face externe 9 du contour annulaire 7. Un trou débouchant 32 sur le second plot 29 permet le passage d'un corps fileté d'une vis d'assemblage (non illustrée) introduite depuis l'orifice 31 et l'arrêt de la tête de cette vis d'assemblage, le corps fileté de la vis d'assemblage traversant le trou débouchant 32 pour venir se visser dans un trou taraudé sur un premier plot 26, une fois la pièce 12 placée sur l'enceinte 13 comme sur la [Fig. 9]. Un joint d'étanchéité 33 est placé sur le rebord 27 pour assurer l'étanchéité entre la pièce 12 et l'enceinte 13 une fois la base réfrigérante 4 constituée.

L'embase 16 de l'enceinte 13 comprend des patins 17, de préférence au nombre de trois, uniformément répartis, comme le montre notamment la [Fig. 5]. Lorsque la base réfrigérante 4 est placée dans le bol 101, les patins 17 viennent en contact avec le fond 102 du bol 101, la paroi annulaire 5 et le contour annulaire 7 épousant la forme du bol 101, comme le montre notamment la [Fig. 8]. Cela permet de maintenir statique le réceptacle 1 dans le bol 101 en évitant que ledit réceptacle 1 tourne dans ledit bol 101, lorsque l'outil 200 est activé en mouvement planétaire. Cela permet aussi de stabiliser convenablement le réceptacle 1 dans le bol 101, en appui sur le fond 102.

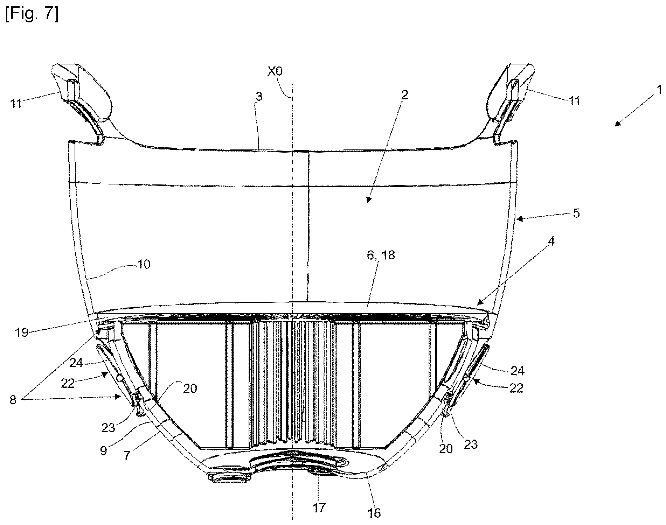

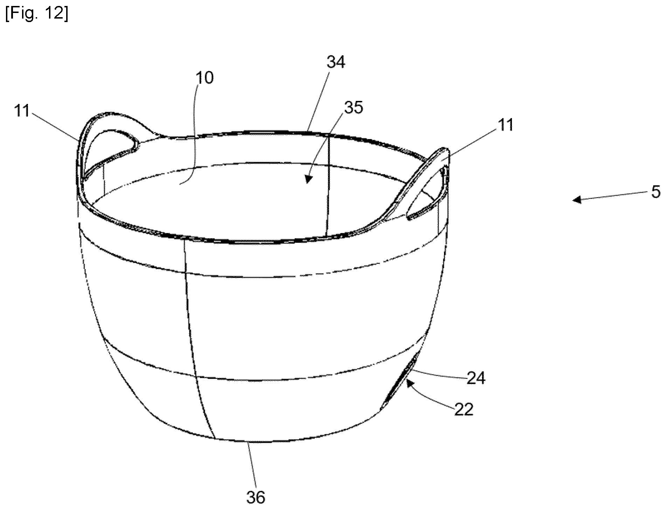

En regard notamment des [Fig. 7], [Fig. 12] et [Fig. 13], la paroi annulaire 5 comprend un bord supérieur 34 définissant une ouverture supérieure 35 correspondant à celle en partie supérieure 3 du contenant 2 défini par l'assemblage de la paroi annulaire 5 avec la base réfrigérante 4. Les organes de préhension 11 s'étendent vers le haut depuis le bord supérieur 34. La paroi annulaire 5 comprend également un bord inférieur 36 définissant une ouverture inférieure 37. La paroi annulaire 5 comprend une face interne 10 qui comporte un épaulement interne 21.

Un dispositif d'enclenchement 22 est agencé sur la paroi annulaire 5, en-dessous de l'épaulement interne 21. Ce dispositif d'enclenchement 22 comprend de préférence deux organes de commande 24 diamétralement opposés sur la paroi annulaire 5 et disposés chacun dans une fenêtre 38 agencée sur la paroi annulaire 5, chaque organe de commande 22 étant relié à la fenêtre 38 respective grâce à deux points d'attache 39a, 39b qui définissent un axe de pivotement X3 s'étendant perpendiculairement à l'axe médian X0 de la base réfrigérante 4 qui est également l'axe médian de la paroi annulaire 5. Les organes de commande 22 et la paroi annulaire 5 sont formés d'une seule pièce dans une matière plastique, par exemple en polyéthylène (PE) ou en polypropylène (PP), offrant ainsi une légère élasticité qui permet de faire pivoter les organes de commande 22 autour de leurs axes de pivotement X3 respectifs en appuyant légèrement sur lesdits organes de commande 22. Ce pivotement des organes de commande 22 permet d'exercer une torsion sur les points d'attache 39a, 39b, les organes de commande 22 reprenant leur position normale grâce à l'élasticité de la matière plastique lorsque l'on cesse d'appuyer sur lesdits organes de commande 22, les points d'attache 39a, 39b reprenant leur état normal (non tordus) du fait de l'élasticité de la matière.

Ces organes de commande 22 comprennent chacun un élément protubérant 23 orienté du côté de la face interne 10 de la paroi annulaire 5. La base réfrigérante 4 est introduite par le haut dans la paroi annulaire 5, en passant par l'ouverture supérieure 35. La base réfrigérante 4 descend ensuite dans la paroi annulaire 5 et ressort en partie par l'ouverture inférieure 37, jusqu'à ce que l'épaulement externe 19 sur la base réfrigérante 4 vienne en appui sur l'épaulement interne 21 sur la face interne 10 de la paroi annulaire 5. Durant cette introduction de la base réfrigérante 4 à l'intérieur de la paroi annulaire 5, les éléments protubérants 23 sur les organes de commande 22 viennent en appui contre la paroi externe 9 du contour annulaire 7 de la base réfrigérante 4, ce qui fait pivoter légèrement les organes de commande 22 selon leur axe de pivotement X3 grâce à l'élasticité de la matière de la paroi annulaire 5. Lorsque l'épaulement externe 19 entre en appui contre l'épaulement interne 21, comme précisé ci-avant, les éléments protubérants 23 sont en correspondance avec la gorge 20 sur la face externe 10 du contour annulaire 7, l'élasticité de la matière de la paroi annulaire 5 permettant alors aux éléments protubérants 23 de reprendre leur position normale (non tordus) et de pénétrer dans la gorge 20, bloquant ainsi la base réfrigérante 4 vis-à-vis de la paroi annulaire 5, le réceptacle 1 étant ainsi constitué. Une légère pression sur les organes de commande 22 permet de dégager les éléments protubérants 23 de la gorge 20, pour un démontage du réceptacle 1, la base réfrigérante 4 étant alors extraite de la paroi annulaire 5 en la sortant vers le haut, par l'ouverture supérieure 34 de la paroi annulaire 5.

L'usage d'une matière plastique pour la paroi annulaire 5 suffit à assurer une étanchéité entre l'épaulement externe 19 sur la base réfrigérante 4 et l'épaule interne 21 sur la paroi annulaire 5, d'autant que les ingrédients de la préparation culinaire froide se solidifient durant le traitement culinaire. On pourrait toutefois ajouter un joint d'étanchéité entre ledit épaulement externe 19 et ledit épaulement interne 21.

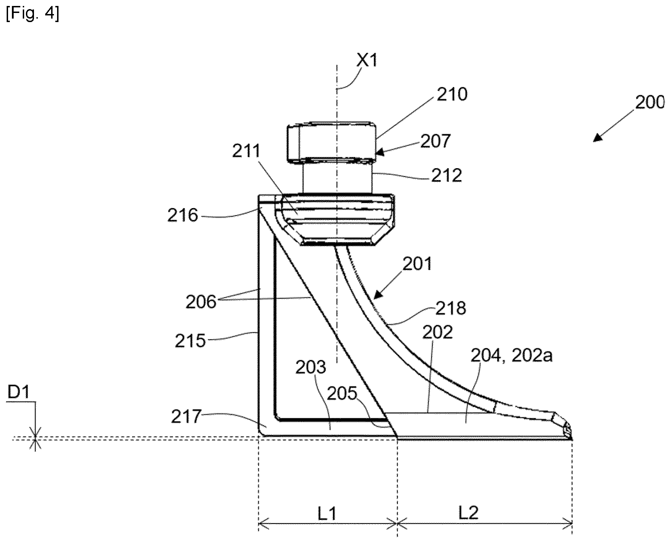

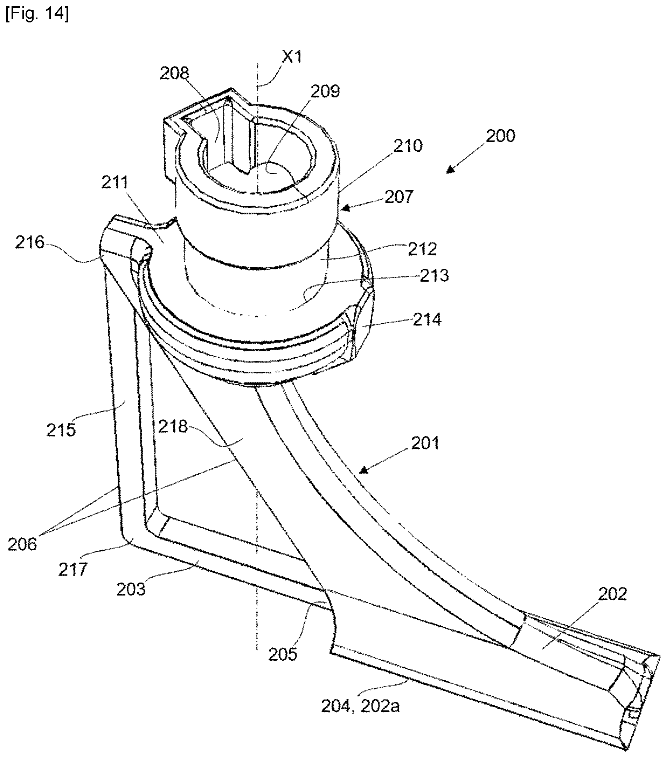

En regard notamment des [Fig. 2], [Fig. 4], [Fig. 9] et [Fig. 14], l'outil 200 comprend une pale 201 qui s'étend radialement par rapport au premier axe X1 de rotation dudit outil 200 monté sur l'arbre de rotation 108 du système d'entraînement 106 de la tête 105. Ce montage de l'outil 200 sur la tête 105 est mis en œuvre grâce à un premier organe d'accouplement 207 sur l'outil 200 coopérant avec un second organe d'accouplement 107 sur l'arbre de rotation 108, de sorte à bloquer la rotation autour de l'axe X1 et la translation le long dudit axe X1 entre ledit outil 200 et ledit arbre de rotation 108. L'outil 200 peut être démonté de la tête 105 après usage, pour son nettoyage. L'homme du métier pourra s'inspirer des appareils de préparation culinaire existants pour la mise en œuvre de premier organe d'accouplement 207 sur l'outil 200 et du second organe d'accouplement 107 sur l'arbre de rotation 108. On peut par exemple prévoir un pion 116 (voir [Fig. 2]) sur l'arbre de rotation 108, ledit pion 116 s'engageant dans une rainure 208 puis dans une cavité 209, présentes sur l'outil 200 (voir [Fig. 14]) pour bloquer la translation et la rotation selon l'axe X1 de l'outil 200 par rapport à l'arbre de rotation 108. Un ressort 109 placé sur l'arbre de rotation 108, au-dessus de l'outil 200, permet de pousser vers le bas ledit outil 200 et de maintenir ainsi le pion 116 dans la cavité 209. Ce type d'accouplement est également connu sous le nom « assemblage à baïonnette ».

De préférence, l'outil 200 comprend une pièce d'adaptation 210 qui comprend le premier organe d'accouplement 207, la pièce d'adaptation 210 étant montée de manière amovible sur une partie supérieure 211 de la pale 201, comme le montrent notamment les [Fig. 4] et [Fig. 14]. Cette pièce d'adaptation 210 comprend donc la rainure 208 et la cavité 209. La pièce d'adaptation 210 est assemblé de manière démontable avec la pale 201. Pour cela, la pièce d'adaptation 210 comprend une partie tubulaire 212 qui s'engage dans une ouverture 213 sur la partie supérieure 211, un mécanisme d'assemblage (non illustré), par exemple un pêne dans la partie supérieure 211 qui s'engage dans une gâche sur la partie tubulaire 212 pour un verrouillage entre ces pièces, le pêne étant actionné par un bouton de commande 214 pour permettre le déverrouillage de la pièce d'adaptation 210 vis à vis de la pale 201. Cela permet avantageusement d'adapter l'outil 200 sur divers appareils de préparation culinaire qui disposent chacun de leur pièce d'adaptation pouvant coopérer avec la pale 201 et qui dispose d'un premier organe d'accouplement adapté à un second organe d'accouplement présent sur un arbre de rotation d'un système d'entraînement présent sur une tête de l'appareil de préparation culinaire.

En regard notamment des [Fig. 4] et [Fig. 14], la pale 201 comprend en partie inférieure une lame 202 et une structure de renfort 206 de la lame 202, cette structure de renfort 206 comprenant un premier élément de renfort 215 s'étendant verticalement entre un bord 216 de la partie supérieure 211 et une extrémité 217 de la lame 202 et un second élément de renfort 218 s'étendant en oblique entre la partie supérieure 211 et la lame 202, comme le montre notamment la [Fig. 4]. Cette structure de renfort 206 participe au brassage des ingrédients de la préparation culinaire froide durant le traitement culinaire, ce qui permet un mélange plus efficace et une aération de la préparation culinaire froide qui est ainsi chargée en petites bulles d'air.

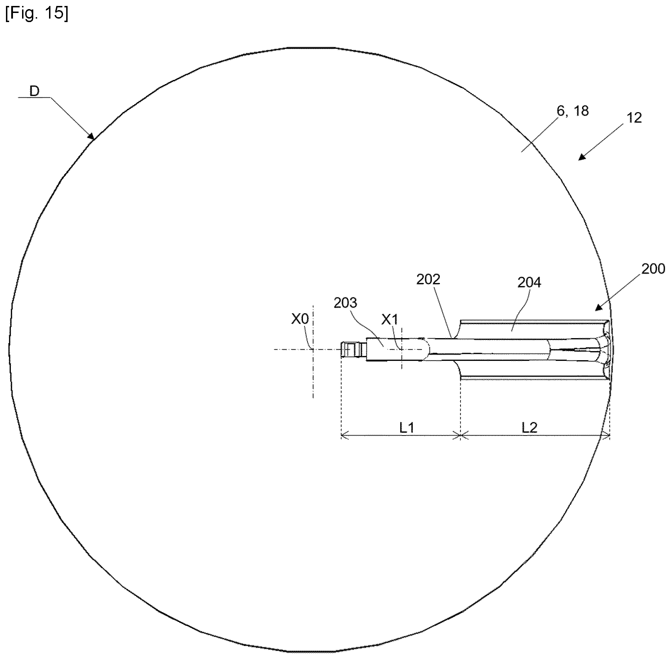

En regard notamment des [Fig. 4], [Fig. 9], [Fig. 14] et [Fig. 15], la lame 202 s'étend radialement par rapport au premier axe X1 et elle comprend une première partie 203 et une seconde partie 204. La première partie 203 est plus ou moins répartie de manière symétrique par rapport au premier axe X1 et elle est prolongée au niveau d'une extrémité 205 par la seconde partie 204 qui est décalée d'un côté du premier axe X1. Une variante envisageable serait de positionner la première partie 203 et la seconde partie 204 d'un même côté du premier axe X1, l'extrémité 217 de la lame 202 étant dans ce cas disposée dans l'alignement du premier axe X1. La première partie 203 est décalée vers le haut par rapport à la seconde partie 204 d'une distance D1 qui, de préférence, est comprise entre 0,5 mm et 3 mm, de préférence entre 1 mm et 2 mm. La première partie 203 de la lame 202 s'étend sur une longueur L1 comprise entre 35 mm et 42 mm, par exemple égale à 38 mm, et la seconde partie 204 de la lame 202 s'étend sur une longueur L2 comprise entre 40 mm et 45 mm, par exemple égale à 42 mm. Ainsi, la seconde partie 204 de la lame 202 vient en contact de la surface supérieure 6 de la base réfrigérante 4 et la première partie 203 de la lame 202 reste légèrement décalée de ladite surface supérieure 6, de la distance D1.

Durant la rotation de l'outil 200 autour du premier axe X1 et du second axe X2 engendrée par le mouvement planétaire, la première partie 203 de la lame 202 étale et tasse sur la surface supérieure 6 les ingrédients de la préparation culinaire en cours de traitement culinaire, ce qui favorise leur refroidissement, et la seconde partie 204 de la lame 202 racle la surface supérieure 6 pour détacher la préparation culinaire froide en cours de traitement culinaire, la structure de renfort 206 favorisant le brassage de ladite préparation culinaire froide en cours de traitement t son aération. La présence du ressort 109 permet de pousser l'outil 200 vers le bas, ce qui favorise un contact convenable de la seconde partie 204 sur la surface supérieure 6.

Comme évoqué précédemment, la surface supérieure 6 présente la forme d'un disque 18. Le disque 18 présente un diamètre D qui, de préférence, est compris entre 160 mm et 200 mm, par exemple égal à 185 mm. De préférence, la seconde partie 204 de la lame 202 et le diamètre D du disque 18 sont dimensionnés pour conserver un rapport L2/D inférieur à 0,3 afin de favoriser l'échange thermique entre la préparation culinaire froide en cours de traitement et la base réfrigérante 4. De préférence ce rapport L2/D est égal à 0,25.

Des variantes sont envisageables dans le cadre de l'invention, c'est-à-dire avec un appareil 100 qui comprend un bol 101 recevant de manière amovible une base réfrigérante 4 présentant une surface supérieure 6 réfrigérante et plane, la surface supérieure 6 recevant un outil qui présente une lame 202 dont au moins une partie 202a vient au contact de la surface supérieure 6 pour la racler lors de la mise en mouvement planétaire dudit outil 200.

Par exemple, l'outil 200 pourrait disposer d'une lame dont toute la longueur serait en contact avec la surface supérieure 6 pour la racler, la lame étant dans ce cas entièrement décalée sur un côté du premier axe X1 et ne comprenant pas de première partie 203. La longueur de la lame en contact avec la surface supérieure 6 pour la racler correspondrait alors à la longueur L2 de la seconde partie 204 de la lame 202.

Selon un autre exemple, le bol 101 pourrait recevoir directement la base réfrigérante 4, sans la paroi annulaire 5, c'est-à-dire sans constituer un réceptacle 1 tel que décrit précédemment, dans quel cas les ingrédients seraient placés directement dans le bol 1 pour venir en contact sur la surface supérieure 6 de la base réfrigérante 4.

Selon un autre exemple, la pale 201 de l'outil 200 pourrait disposer d'une lame sans la structure de renfort 206 décrite précédemment, ou avec une structure de renfort agencée différemment.

Une variante de l'outil 200 est également possible sans la pièce d'adaptation 210, dans quel cas le premier organe d'accouplement 207 est directement mis en œuvre sur la partie supérieure 211 de la pale 201.

## Revendications

1. Appareil (100) de préparation culinaire, lequel comprend un corps (103) présentant une base (104), une tête (105) s'étendant au-dessus de la base (104), et un bol (101) configuré pour être engagé sur la base (104), la tête (105) étant configurée pour recevoir un outil (200) de traitement culinaire et comprenant un système d'entraînement (106) configuré pour entraîner l'outil (200) de traitement culinaire selon un mouvement planétaire, la tête (105) étant configurée pour être déplacée dans une position engagée où l'outil (200) de traitement culinaire se loge dans le bol (101) ou dans une position dégagée où l'outil (200) de traitement culinaire est éloigné du bol (101), **caractérisé en ce que** le bol (101) reçoit de manière amovible une base réfrigérante (4) présentant une surface supérieure (6) qui est réfrigérante et plane, et **en ce que** l'outil de traitement culinaire comprend une lame (202) qui présente au moins une partie (202a) venant au contact de la surface supérieure (6) pour la racler lors de sa mise en mouvement planétaire.

2. Appareil (100) de préparation culinaire selon la revendication 1, dans lequel la surface supérieure (6) est un disque (18) de diamètre D, l'au moins une partie (202a) de lame (202) venant au contact du disque (18) et étant décalée d'un premier axe (X1) de rotation de la lame sur elle-même, ladite au moins une partie (202a) s'étendant sur une longueur L2, le rapport L2/D étant inférieur à 0,3.

3. Appareil (100) de préparation culinaire selon la revendication 2, dans lequel le rapport L2/D est égal à 0,25.

4. Appareil (100) de préparation culinaire selon l'une quelconque des revendications 1 à 3, dans lequel la lame (202) comprend une première partie (203) et une seconde partie (204), la première partie (203) s'étendant radialement à un premier axe (X1) de rotation de la lame (202) sur elle-même et étant prolongée par la seconde partie (204) qui est décalée du premier axe (X1) et constitue ladite au moins une partie (202) , la seconde partie (204) étant disposée à une distance D1 en-dessous de la première partie (203), la première partie (203) étant configurée pour être espacer de la surface supérieure (6) et tasser la préparation culinaire sur ladite surface supérieure (6) et la seconde partie (204) étant configurée pour être en appui sur la surface supérieure (6) et la racler, durant un mouvement planétaire de l'outil (200) de traitement culinaire.

5. Appareil (100) de préparation culinaire selon la revendication 4, dans lequel la distance D1 est comprise entre 0,5 mm et 3 mm, de préférence entre 1 mm et 2 mm.

6. Appareil (100) de préparation culinaire selon l'une quelconque des revendications 4 ou 5, dans lequel la première partie (203) s'étend radialement de part et d'autre du premier axe (X1), la seconde partie (204) prolongeant une extrémité (205) de la première partie (203).

7. Appareil de préparation culinaire (1) selon l'une quelconque des revendications 1 à 6, dans lequel l'outil (200) de traitement culinaire comprend une structure de renfort (206) de la lame (202), la structure de renfort (206) étant configurée pour participer au brassage de la préparation culinaire durant le mouvement planétaire dudit outil (200) de traitement culinaire.

8. Appareil (100) de préparation culinaire selon l'une quelconque des revendications 1 à 7, dans lequel l'outil (200) de traitement culinaire comprend un premier organe d'accouplement (207) apte à être assemblé avec un second organe d'accouplement (107) d'un arbre de rotation (108) du système d'entraînement (106).

9. Appareil (100) de préparation culinaire selon la revendication 8, dans lequel l'outil (200) de traitement culinaire comprend une pièce d'adaptation (210) et une pale (201) comportant la lame (202), un système d'assemblage étant agencé entre la pièce d'adaptation (210) et la pale (201) et configuré pour assembler de manière amovible la pièce d'adaptation et la pale (201) selon le premier axe (X1), ladite pièce d'adaptation (210) comprenant le premier organe d'accouplement (207).

10. Appareil (100) de préparation culinaire selon l'une quelconque des revendications 8 ou 9, dans lequel le second organe d'accouplement (107) comprend un ressort (109) configuré pour plaquer l'au moins une partie (202a) de la lame (202) contre la surface supérieure (6), lorsque la tête (105) est dans la position engagée.

11. Appareil (100) de préparation culinaire selon l'une quelconque des revendications 1 à 10, lequel comprend un réceptacle (1) qui comporte la base réfrigérante (4) et une paroi annulaire (5) montée de manière amovible sur la base réfrigérante (4), la base réfrigérante (4) comprenant un contour annulaire (7), un système d'assemblage (8) étant agencé entre une face externe (9) du contour annulaire (7) et une face interne (10) de la paroi annulaire (5) et configuré pour permettre un verrouillage étanche entre la face externe (9) et la face interne (10) lors d'une introduction de la base réfrigérante (4) dans la paroi annulaire (5), de sorte que la surface supérieure (6) et la face interne (10) définissent un contenant (2) une fois le réceptacle (1) formé, et pour permettre un déverrouillage de la face externe (9) et de la face interne (10) de sorte à pouvoir séparer la base réfrigérante (4) de la paroi annulaire (5) une fois le réceptacle (1) extrait du bol (101).
